# EUROPEAN PATENT SPECIFICATION

(11) **EP 3 874 987 B1**
(45) Date of publication and mention of the grant of the patent: **04.09.2024**
(21) Application number: 20161607.5
(22) Date of filing: 06.03.2020
(51) Int. Cl.: G01N 19/04, A43D 1/08, A43D 999/00

(54) **DEVICE AND METHOD FOR CHECKING ADHESION BETWEEN HEEL AND INSOLE**
VORRICHTUNG UND VERFAHREN ZUR ÜBERPRÜFUNG DER ADHÄSION ZWISCHEN ABSATZ UND INNENSOHLE
DISPOSITIF ET PROCÉDÉ POUR TESTER L'ADHÉRENCE ENTRE TALON ET SEMELLE

(43) Date of publication of application: 08.09.2021
(73) Proprietor: Tacchificio Villa Cortese S.r.l., 20020 Villa Cortese MI (IT)
(72) Inventor: GAZZARDI, Fausto Claudio, 20020 Villa Cortese (IT); PAGANINI, Alessandro, 20020 Villa Cortese (IT); TAGLIALEGNE, Luca, 55100 Lucca (IT)
(74) Representative: Mittler, Andrea

(56) References cited:
- CN-A- 107 518 523
- CN-U- 86 205 689
- CN-U- 86 206 187

## Description

The present invention relates to a device and a method for checking the adhesion between a heel and insole/vamp; it is generally directed to the field of fashion, and more precisely to the field of footwear.

The fastening between heel and insole in women's shoes is carried out by means of mechanical connecting methods, such as for example the use of one or more screws and/or nails. They take hold in the body of the heel (whether it be made of polymer material or wood or other material) and are inserted from the inner part of the shoe (insole), prior to the application of the insole. A possible defect occurring during fastening may result in a partial detachment of the heel during the regular use of the shoe.

The quality check is commonly performed during the production by a skilled operator who stresses a (randomly selected) shoe by manually bending it. Specifically, the operator grasps the heel with one hand, grasps the opposite (open) side of the shoe with the other hand, and exerts a compression which causes a pressure-flexure stress in the attachment point between heel and insole. Defective fastening results in the partial detachment of the fastening, with the formation of a visible gap (with the naked eye) between insole and heel. This test, which is manually performed, has poor repeatability and objectivity, depending on the force imparted by the operator, which is neither measured nor controlled. Therefore, the assessment of the adequacy of the fastening of the tested shoe is a prerogative of the subjective judgement of the operator.

Both European and American legislations are provided with experimental tests (on whole shoes) for checking the adhesion between heel and insole. Such experimental tests are of a destructive nature, require partially cutting a part of the shoe, and can only be performed in a laboratory. Therefore, they are not suitable for performing a quality check at the customers' home or on production lines without destroying shoes having an adequate fastening degree.

In particular, Standard ASTM F2232-14 is significant for the prior art, prescribing an experimental traction test in which the heel is stressed by a longitudinal force (with respect to the shoe). The shoe is tested in vertical position, with the front part down, grasped by the grip of the testing machine. In order to ensure the proper application of the load, a through hole is made in the heel, in which a transverse bar is inserted, which, through a specific apparatus, is connected to the other end of the testing machine. The test measures the maximum force required to detach the heel from the insole. Although this experimental test is instrumented and repeatable, it is not suitable for the quality check activity which is to be performed: indeed, the traction stress of this test does not cause the partial detachment phenomenon between heel and insole; moreover, by irreparably damaging the heel (with the through hole) and the front part of the shoe (with the grip of the vice, which damages the outer surface of the shoe), the methods of applying the load do not allow non-destructive type tests.

Pendulum devices for assessing the resistance to the impact of high heels in a laboratory, for example described in CN-86206187 and CN-86205689, devices for measuring the performance of shoes in terms of comfort, for example shown in US-6988416 and US-6289743, and devices for measuring and simulating the wear of the soles of shoes, for example disclosed in US-9560897, US-3516281 and US-2007/0266581 are also known.

It is the object of the present invention to provide a device for checking the fastening quality of the heel to the insole of women's shoes with a medium/high heel.

It is a further object of the present invention that said device allows a non-destructive, repeatable and quantitative check on the adequacy of the connection of the heel to the insole.

Again, it is a further object of the present invention that the device is easy to transport and operate, thus allowing an easy movement thereof, when required.

According to the invention, said and further objects are achieved by a device for the quality check of the adhesion between a heel and an insole of a shoe, characterized in that it comprises:
- a support for the shoe so that the heel is posteriorly associated with the support,
- a loading cell to which the support is coupled,
- pressing means able to interact with the insole along a main axis coinciding with a loading axis of the loading cell, and
- means able to detect the position of the pressing means.

Not last, it is the object of the present invention to realize a method for the quality check of the adhesion of the heel to the insole which is not destructive, is immediate to assess, and which uses simple and affordable means.

According to the invention, said not last object is achieved by a method for the quality check of the adhesion between a heel and an insole of a shoe, characterized in that it comprises the following steps:
- positioning the shoe so that the heel is posteriorly associated with a support coupled to a loading cell,
- positioning pressing means in contact with the insole so as to zero the value of the force applied to the insole by the pressing means, and the value of the movement of the pressing means,
- thrusting the pressing means along a main axis coinciding with a loading axis of the loading cell so as to compress the shoe up to reaching a specific given value of the movement specific for the model of shoe and of heel,
- checking the adhesion between the heel and the insole.

The device advantageously realizes an experimental procedure for assessing the quality of the fastening between heel and insole through a non-destructive test.

The device is transportable, simple to set up and implements a method for interpreting the results of non-destructive tests and for providing a repeatable and quantitative indication on the adequacy of the connection of the heel to the insole.

The manual test performed by the skilled operator is advantageously repeated with scientific accuracy without breaking the sample subjected to the test by stressing only the connection between heel and insole in order to identify the defective connections which result in apparent gaps or detachments in an early step of the application of the load with respect to the connections having sufficient quality.

These and other features of the present invention will become more apparent from the following detailed description of a practical exemplary embodiment thereof, shown by way of non-limiting example in the accompanying drawings, in which:
- figure 1 shows a perspective view of a device according to the present invention;
- figure 2 shows a front view of the device;
- figure 3 shows a front view of an arrangement of a straight heel on a support of the device;
- figure 4 shows a front view of an arrangement of a curved heel on a support of the device;
- figure 5 shows movement-force graphs of two experimental tests, a positive one and the other one negative.

A device 20 for the quality check of the adhesion between a heel 21 and an insole 22 of a shoe 23 comprises a frame 24 consisting of a base 1, a cover 7 and four uprights 6 connected to the four vertexes of the base 1 and supporting the cover 7. By insole 22 it is meant the element on which the user's foot rests.

The base 1 preferably consists of a stiff metal plate framed with "L" shaped profiles serving the purpose of increasing the flexing rigidity. The fastening between plate and profiles occurs by means of solid rivets or bolted connections.

The four uprights 6 preferably are "L" or "U" shaped profiles.

A loading cell 2 with force sensors is fastened in the middle of the base 1: the load application axis (loading axis) of the loading cell 2, which is arranged vertically, is taken as a reference for defining a main axis 3 of the device 20.

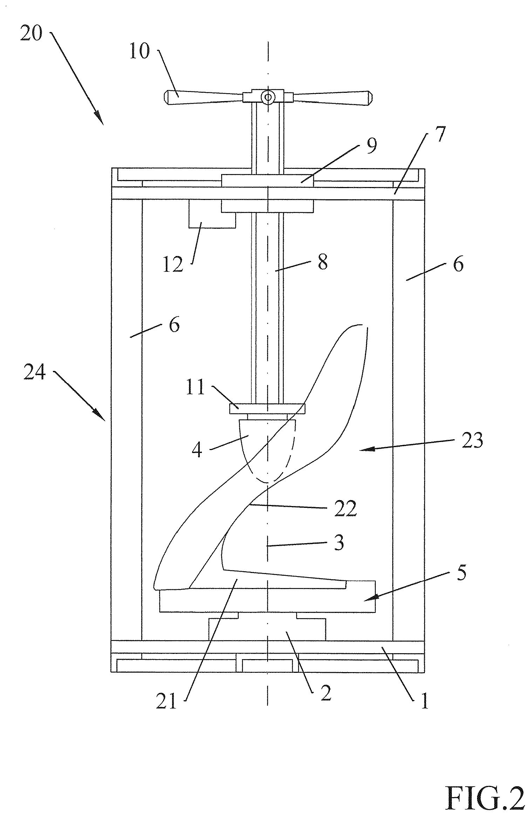

A support 5 for the shoe 23 is coupled over the loading cell 2. Such a support 5, which is made of a material which does not damage the finishing of the heel 21, has dimensions which are not greater than those of the base 1, and a seat 51 for the heel 21 is made on the upper part, preferably a recess, the shape of which substantially is the negative of the heel 21. The shoe 23 indeed is arranged vertically (figure 2), with the back part of the heel 21 at the bottom accommodated in the recess of the support 5, which therefore serves the purpose of keeping the correct centering of the heel 21 when the test is being performed.

The centering means may be of other type, for example a gripper coupler, but the heel 21 associated with the support 5 preferably is to be kept centered, laying on the support 5 substantially in the longitudinal direction of the height of the heel 21, i.e. at the back associated with the support 5, simply resting on and/or with suitable coupling means.

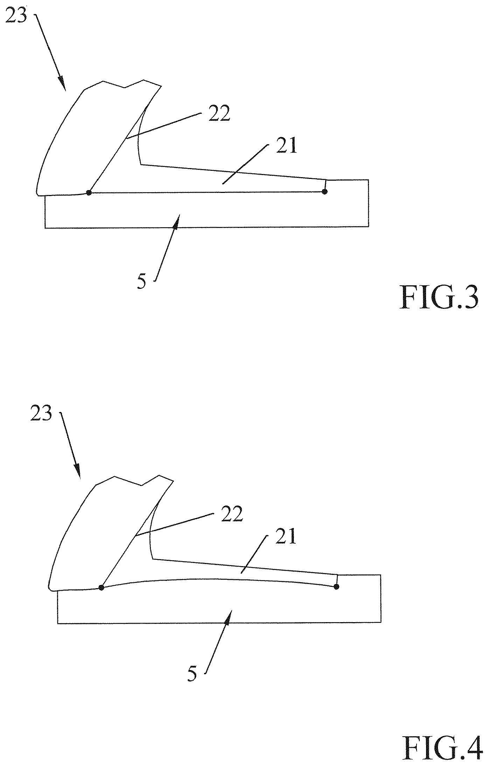

Even if the heel 21 has a curved axis, the support 5 preferably is such as to ensure the ideal straight line joining the two back upper and lower ends of the heel 21 being parallel to the surface of the base 1 of the device 20 (compare figures 3 and 4).

Therefore, the heel 21 lies at the back on the support 5 coupled to the loading cell 2.

In a preferred embodiment, said ideal straight line is geometrically contained in a plane orthogonal to the main axis 3 which intersects said ideal straight line in the intermediate point between said two end points of the heel 21.

There is a through hole through which a threaded rod 8 may slide, in the middle of the cover 7, at the main axis 3 of the device 20. Such a threaded rod 8 meshes in a ring nut 9 fastened to the cover 7 through screws or rivets.

An ergonomic knob 10 for manually actuating the device 20 is fastened at the upper end of the threaded rod 8. Alternatively, the movement may be obtained by means of a suitable pneumatic, hydraulic or electric actuation system (with linear actuator).

A plate 11 is fastened at the lower end of the threaded rod 8, being able to support a presser 4 so that the latter is free to rotate about the main axis 3 of the device 20, advancing along said main axis 3 due to the ring nut 9 fastened to the cover 7. The presser 4 preferably has a beveled tip and is covered with soft material which does not damage the insole 22 of the shoe 23.

The pressing means may be of another type, for example with lever-actuated means. The use of a threaded rod 8 is preferred because it ensures a greater accuracy of the movement without sudden actuations. Contrarily, the lever causes a load application which is too quick, with too great forces involved.

Regardless of the shape of the pressing means, they are to act on the insole 22 along the main axis 3, which corresponds to the loading direction (loading axis) which is detectable by the loading cell 2. The support 5 is able to counteract the thrust of the pressing means.

The cover 7 preferably consists of a metal plate framed with "L" profiles and is provided with longitudinal and transverse stiffeners, which increase the rigidity thereof.

A distance detector 12, preferably an ultrasound detector, is applied below the cover 7, facing the plate 11, so as to measure the position of the presser 4 by means of position sensors.

The detection means may be of various type, in any case being able to measure the position of the pressing means with respect to the insole 22.

Operatively, there is an initial need to calibrate the device 20 by bringing the presser 4 into contact with the insole 22 in the shoe 23 at the beginning of the test: the force and movement values of the loading cell 2 and of the detector 12 are zeroed.

The test consists in pushing the presser 4 along the main axis 3 so as to compress the shoe 23 up to reaching a specific given value of the movement for the model of the shoe 23 and the heel 21.

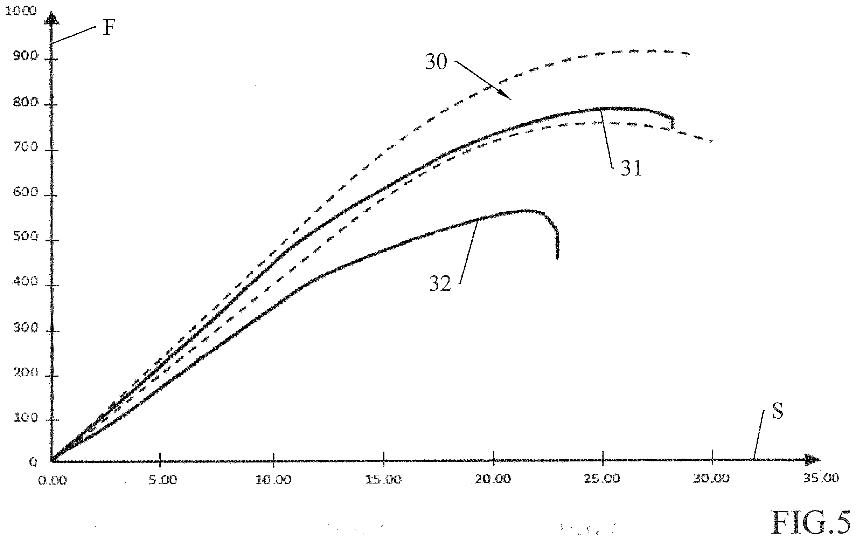

The movement and the corresponding force are recorded during the test, thus generating a force-movement diagram FS (figure 5, F in Newton and S in millimeters). At the end of the test, the shoe 23 for which the force-movement diagram FS will not deviate from an envelope area 30 defined by sample tests and delimited in figure 5 by two dotted lines, will pass the quality test.

Therefore, the device 20 comprises an electronic processor in which there are stored the sample tests of the shoe 23 and of the heel 21 by model and a processed envelope area 30, namely an area of the force-movement graph FS in which the shoe 23 is judged with a positive adhesion between the heel 21 and the insole 22.

Alternatively, the check may occur visually in the device 20, the device 20 having been however initialized and sample tests having been performed to understand in advance the movement of the presser 4 to be set.

In the embodiment described herein, the device 20 thus comprises the frame 24 for housing the shoe 23, the presser 4 and the related actuation system (whether it is manual, hydraulic or pneumatic), force and movement sensors, a wired connection with an electronic processor, and possibly a software for comparing data from the test and those from the (conveniently prepared) database which determines if the sample passes the quality test or not.

In particular, the height of the heel 21 is the main parameter regulating the mechanical behavior of the shoe 23. The same trend in the force-to-movement ratio corresponds to each height of the heel 21 (excluding the defective samples). Vice versa, the heels 21 having a defect (which therefore may undergo early detachment) show force-movement diagrams which are significantly different from those of the non-defective models. By way of example, refer to the comparison in figure 5 between the experimental test on a ready-to-use model and on a defective one, in which a diagram 31 representing a shoe 23 with a positive adhesion of the heel 21 to the insole 22 is depicted, and a diagram 32 representing a shoe 23 with a defective adhesion of the heel 21 to the insole 22 is depicted.

As already mentioned, once a significant number of sample tests is performed for the different models of heel 21 and of shoe 23 (including the various possible heights), an area of peculiar envelope 30 of force-movement curves FS associated on a statistical base with each type of heel 21 and shoe 23 may be outlined. Thus, a given connection between heel 21 and insole 22 will be defective if the force-movement diagram FS of the corresponding experimental test falls outside the reference envelope area 30.

The frame 24 is made of aluminum or other lightweight and resistant material.

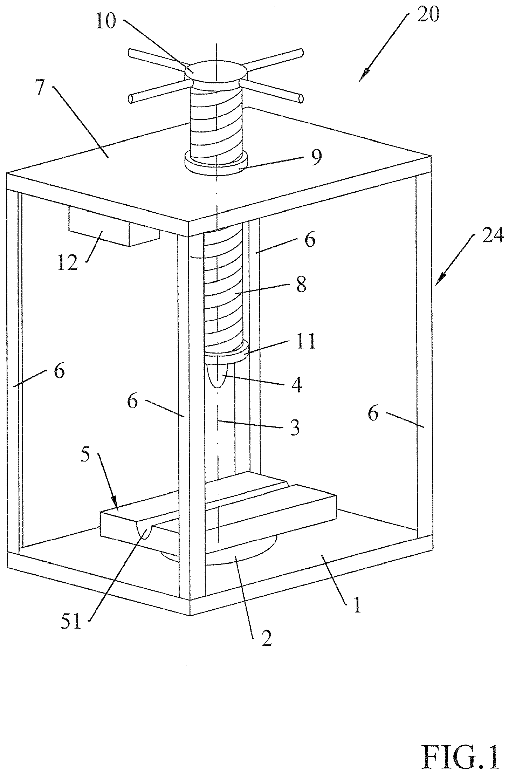

In the above-described embodiment particularly shown in figures 1 and 3, the main axis 3 is vertical and the heel 21 lies longitudinally substantially on a horizontal plane. Said embodiment facilitates the centering of the heel 21 by the seat 51, but a different lying position of the shoe 23 and of the pressing means is possible: for example, the support 5 may comprise coupling means which allow the heel 21 to be held longitudinally vertical, namely with the shoe 23 horizontal as worn by the user; accordingly, the pressing means are able of moving along a horizontal main axis 3 while always acting on the insole 22 in the shoe 23.

Regardless of the lying position of the shoe, the device 20 advantageously realizes an experimental procedure for assessing the quality of the fastening between heel 21 and insole 22 through a non-destructive test.

The device 20 is transportable, simple to set up and implements a method for interpreting the results of non-destructive tests and for providing a repeatable and quantitative indication on the adequacy of the connection of the heel 21 to the insole 22.

The manual test performed by the skilled operator is advantageously repeated with scientific accuracy without breaking the sample subjected to the test by stress-bending only the connection between heel 21 and insole 22 to identify the defective connections which result in apparent gaps or detachments in an early step of the load application compared to the connections having sufficient quality. The quality check is considered passed when shoe 23 has no gap after testing.

## Claims

1. Device (20) for the quality check of the adhesion between a heel (21) and an insole (22) of a shoe (23), **characterized in that** it comprises
a support (5) for the shoe (23) so that the heel (21) is posteriorly associated with the support (5),
a loading cell (2) to which the support (5) is coupled,
pressing means able to interact with the insole (22) along a main axis (3) coinciding with a loading axis of the loading cell (2), and
means able to detect the position of the pressing means.

2. Device (20) according to claim 1, **characterized in that** the support (5) is able to ensure that the main axis (3) passes through the intermediate point of an ideal straight line j oining the two back ends, upper and lower, of the heel (21).

3. Device (20) according to claim 2, **characterized in that** the support (5) is able to ensure that said ideal straight line is contained in a plane which is orthogonal to the main axis (3).

4. Device (20) according to any one of the preceding claims, **characterized in that** the pressing means comprise a threaded rod (8) rotatably associated by a ring nut (9) with a through hole of a cover (7) of the device (20), wherein the threaded rod (8), while rotating, is able to slide vertically along the main axis (3).

5. Device (20) according to claim 4, **characterized in that** the lower end of the threaded rod (8) supports a presser (4).

6. Device (20) according to any one of the preceding claims, **characterized in that** it comprises a distance detector (12) facing the pressing means.

7. Device (20) according to any one of the preceding claims, **characterized in that** the pressing means are actuated manually or with pneumatic, hydraulic or electrical means.

8. Device (20) according to any one of the preceding claims, **characterized in that** it comprises an electronic processor wherein sample tests by model of shoe (23) and heel (21) are stored.

9. Device (20) according to claim 8, **characterized in that** said electronic processor comprises a software able to realize a force-movement graph (FS) during the interaction of the pressing means with the insole (22), and an envelope area (30) of force-movement graphs (FS) of sample tests by model of shoe (23) and heel (21), wherein the shoe (23) is judged with a positive adhesion between heel (21) and insole (22).

10. Device (20) according to any one of the preceding claims, **characterized in that** the main axis (3) is vertical.

11. Device (20) according to claim 10, **characterized in that** it comprises a frame (24) consisting of a base (1), a cover (7) and four uprights (6) connected to the four vertexes of the base (1) and supporting the cover (7), wherein the base (1) supports the loading cell (2) and the cover (7) supports the pressing means.

12. Method for the quality check of the adhesion between a heel (21) and an insole (22) of a shoe (23), **characterized in that** it comprises the following steps:
- positioning the shoe (23) so that the heel (21) is posteriorly associated with a support (5) coupled to a loading cell (2),
- positioning pressing means in contact with the insole (22) so as to zero the value of the force (F) applied to the insole (22) by the pressing means, and the value of the movement (S) of the pressing means,
- thrusting the pressing means along a main axis (3) coinciding with a loading axis of the loading cell (2) so as to compress the shoe (23) up to reaching a specific given value of the movement specific for the model of shoe (23) and heel (21),
- checking the adhesion between the heel (21) and the insole (22).

13. Method according to claim 12, **characterized in that** a force-movement diagram (FS) is generated during the thrust action, wherein the checking step occurs by comparing the force-movement diagram (FS) generated with an envelope area (30) defined by sample tests performed on the same model of shoe (23) and heel (21), wherein the adhesion between heel (21) and insole (22) is judged positively only if the force-movement diagram (FS) generated falls within the envelope area (30).

## Patentansprüche

1. Vorrichtung (20) zur Qualitätskontrolle der Adhäsion zwischen einem Absatz (21) und einer Innensohle (22) eines Schuhs (23), **dadurch gekennzeichnet, dass** sie aufweist:
einen Halter (5) für den Schuh (23), sodass der Absatz (21) hinten mit dem Halter (5) in Verbindung ist,
eine Belastungszelle (2), mit der der Halter (5) gekoppelt ist,
eine Presseinrichtung, die entlang einer Hauptachse (3), die mit einer Belastungsachse der Belastungszelle (2) übereinstimmt, mit der Innensohle (22) interagieren kann, und
eine Einrichtung, die die Position der Presseinrichtung detektieren kann.

2. Vorrichtung (20) nach Anspruch 1, **dadurch gekennzeichnet, dass** der Halter (5) sicherstellen kann, dass die Hauptachse (3) durch den Zwischenpunkt einer idealen Geraden verläuft, die die beiden hinteren Enden, das obere und das untere, des Absatzes (21) verbindet.

3. Vorrichtung (20) nach Anspruch 2, **dadurch gekennzeichnet, dass** der Halter (5) sicherstellen kann, dass die ideale Gerade in einer Ebene enthalten ist, die orthogonal zu der Hauptachse (3) ist.

4. Vorrichtung (20) nach einem der vorhergehenden Ansprüche, **dadurch gekennzeichnet, dass** die Presseinrichtung eine Gewindestange (8) aufweist, die mittels einer Ringmutter (9) drehbar einem Durchgangsloch einer Abdeckung (7) der Vorrichtung (20) zugeordnet ist, wobei die Gewindestange (8), während sie sich dreht, vertikal entlang der Hauptachse (3) gleiten kann.

5. Vorrichtung (20) nach Anspruch 4, **dadurch gekennzeichnet, dass** das untere Ende der Gewindestange (8) einem Presser (4) hält.

6. Vorrichtung (20) nach einem der vorhergehenden Ansprüche, **dadurch gekennzeichnet, dass** sie einen Abstandsdetektor (12) aufweist, der der Presseinrichtung zugewandt ist.

7. Vorrichtung (20) nach einem der vorhergehenden Ansprüche, **dadurch gekennzeichnet, dass** die Presseinrichtung manuell oder mit einer pneumatischen, hydraulischen oder elektrischen Einrichtung betätigt wird.

8. Vorrichtung (20) nach einem der vorhergehenden Ansprüche, **dadurch gekennzeichnet, dass** sie einen elektronischen Prozessor aufweist, in dem Probentests nach Modell des Schuhs (23) und Absatz (21) gespeichert sind.

9. Vorrichtung (20) nach Anspruch 8, **dadurch gekennzeichnet, dass** der elektronische Prozessor eine Software aufweist, die während der Interaktion der Presseinrichtung mit der Innensohle (22) eine Kraft-Bewegungs-Kurve (FS) und einen Hüllkurvenbereich (30) von Kraft-Bewegungs-Kurven (FS) von Probentests nach Modell des Schuhs (23) und des Absatzes (21) realisieren kann, wobei der Schuh (23) mit einer positiven Adhäsion zwischen dem Absatz (21) und der Innensohle (22) beurteilt wird.

10. Vorrichtung (20) nach einem der vorhergehenden Ansprüche, **dadurch gekennzeichnet, dass** die Hauptachse (3) vertikal verläuft.

11. Vorrichtung (20) nach Anspruch 10, **dadurch gekennzeichnet, dass** sie einen Rahmen (24) aufweist, der aus einer Basis (1), einer Abdeckung (7) und vier Stützen (6) besteht, die mit den vier Scheiteln der Basis (1) verbunden sind und die Abdeckung (7) tragen, wobei die Basis (1) die Belastungszelle (2) hält und die Abdeckung (7) die Presseinrichtung hält.

12. Verfahren zur Qualitätskontrolle der Adhäsion zwischen einem Absatz (21) und einer Innensohle (22) eines Schuhs (23), **dadurch gekennzeichnet, dass** es die folgenden Schritte aufweist:
- Positionieren des Schuhs (23) so, dass der Absatz (21) hinten mit einem Halter (5) in Verbindung ist, der mit einer Belastungszelle (2) gekoppelt ist,
- Positionieren einer Presseinrichtung in Kontakt mit der Innensohle (22) so, dass der Wert der Kraft (F), die durch die Presseinrichtung auf die Innensohle (22) ausgeübt wird, und der Wert der Bewegung (S) der Presseinrichtung auf Null gesetzt werden,
- Schieben der Presseinrichtung entlang einer Hauptachse (3), die mit einer Belastungsachse der Belastungszelle (2) übereinstimmt, um den Schuh (23) bis zum Erreichen eines bestimmten für das Modell des Schuhs (23) und des Absatzes (21) spezifischen vorgegebenen Bewegungswertes zusammenzudrücken,
- Überprüfen der Adhäsion zwischen dem Absatz (21) und der Innensohle (22).

13. Verfahren nach Anspruch 12, **dadurch gekennzeichnet, dass** während des Schubvorgangs ein Kraft-Bewegungs-Diagramm (FS) erzeugt wird, wobei der Prüfschritt durch Vergleichen des erzeugten Kraft-Bewegungs-Diagramms (FS) mit einem Hüllkurvenbereich (30) erfolgt, der durch Probentests definiert ist, die an dem gleichen Modell des Schuhs (23) und des Absatzes (21) durchgeführt wurden, wobei die Adhäsion zwischen dem Absatz (21) und der Innensohle (22) nur dann positiv beurteilt wird, wenn das erzeugte Kraft-Bewegungs-Diagramm (FS) in den Hüllkurvenbereich (30) fällt.

## Revendications

1. Dispositif (20) pour contrôler la qualité de l'adhérence entre un talon (21) et une semelle intérieure (22) d'une chaussure (23), **caractérisé en ce qu'**il comprend :
un support (5) pour la chaussure (23) de sorte que le talon (21) est associé, de manière postérieure, au support (5),
une cellule de charge (2) à laquelle le support (5) est couplé,
des moyens de pression pouvant interagir avec la semelle intérieure (22) le long d'un axe principal (3) coïncidant avec un axe de charge de la cellule de charge (2), et
des moyens pouvant détecter la position des moyens de pression.

2. Dispositif (20) selon la revendication 1, **caractérisé en ce que** le support (5) peut garantir que l'axe principal (3) passe par le point intermédiaire d'une ligne droite idéale assemblant les deux extrémités arrière, supérieure et inférieure, du talon (21).

3. Dispositif (20) selon la revendication 2, **caractérisé en ce que** le support (5) peut garantir que ladite ligne droite idéale est contenue dans un plan qui est orthogonal à l'axe principal (3).

4. Dispositif (20) selon l'une quelconque des revendications précédentes, **caractérisé en ce que** les moyens de pression comprennent une tige filetée (8) associée, de manière rotative, à un écrou à oeil (9) avec un trou débouchant d'un couvercle (7) du dispositif (20), dans lequel la tige filetée (8), tout en tournant, peut coulisser verticalement le long de l'axe principal (3).

5. Dispositif (20) selon la revendication 4, **caractérisé en ce que** l'extrémité inférieure de la tige filetée (8) supporte un dispositif de pression (4).

6. Dispositif (20) selon l'une quelconque des revendications précédentes, **caractérisé en ce qu'**il comprend un détecteur de distance (12) faisant face aux moyens de pression.

7. Dispositif (20) selon l'une quelconque des revendications précédentes, **caractérisé en ce que** les moyens de pression sont actionnés manuellement ou avec des moyens pneumatiques, hydrauliques ou électriques.

8. Dispositif (20) selon l'une quelconque des revendications précédentes, **caractérisé en ce qu'**il comprend un processeur électronique, dans lequel sont mémorisés des essais d'échantillon par modèle de chaussure (23) et de talon (21).

9. Dispositif (20) selon la revendication 8, **caractérisé en ce que** ledit processeur électronique comprend un logiciel pouvant réaliser un graphique de force - déplacement (FS) pendant l'interaction des moyens de pression avec la semelle intérieure (22), et une zone d'enveloppe (30) des graphiques de force - déplacement (FS) des essais d'échantillon par modèle de chaussure (23) et de talon (21), dans lequel la chaussure (23) est évaluée avec une adhérence positive entre le talon (21) et la semelle intérieure (22).

10. Dispositif (20) selon l'une quelconque des revendications précédentes, **caractérisé en ce que** l'axe principal (3) est vertical.

11. Dispositif (20) selon la revendication 10, **caractérisé en ce qu'**il comprend un bâti (24) se composant d'une base (1), d'un couvercle (7) et de quatre montants (6) raccordés aux quatre sommets de la base (1) et supportant le couvercle (7), dans lequel la base (1) supporte la cellule de charge (2) et le couvercle (7) supporte les moyens de pression.

12. Procédé pour contrôler la qualité de l'adhérence entre un talon (21) et une semelle intérieure (22) d'une chaussure (23), **caractérisé en ce qu'**il comprend les étapes suivantes :
- positionner la chaussure (23) de sorte que le talon (21) est associé, de manière postérieure, à un support (5) couplé à une cellule de charge (2),
- positionner des moyens de pression en contact avec la semelle intérieure (22) afin de mettre à zéro la valeur de la force (F) appliquée sur la semelle intérieure (22) par les moyens de pression, et la valeur du déplacement (S) des moyens de pression,
- pousser les moyens de pression le long d'un axe principal (3) coïncidant avec un axe de charge de la cellule de charge (2) afin de comprimer la chaussure (23) jusqu'à atteindre une valeur donnée spécifique du déplacement spécifique pour le modèle de chaussure (23) et de talon (21),
- contrôler l'adhérence entre le talon (21) et la semelle intérieure (22).

13. Procédé selon la revendication 12, **caractérisé en ce qu'**un graphique de force - déplacement (FS) est généré pendant l'action de poussée, dans lequel l'étape de contrôle a lieu en comparant le graphique de force - déplacement (FS) généré avec une zone d'enveloppe (30) définie par des essais d'échantillon réalisés sur le même modèle de chaussure (23) et de talon (21), dans lequel l'adhérence entre le talon (21) et la semelle intérieure (22) est évaluée positivement uniquement si le graphique de force - déplacement (FS) généré tombe dans la zone d'enveloppe (30).
